# EUROPÄISCHE PATENTSCHRIFT

(11) **EP 2 866 115 B1**
(45) Veröffentlichungstag und Bekanntmachung des Hinweises auf die Patenterteilung: **18.09.2019**
(21) Anmeldenummer: 14170931.1
(22) Anmeldetag: 03.06.2014
(51) Int. Cl.: G05D 16/06

(54) **Ventil mit austauschbarer Kartusche**
Valve with replaceable cartridge
Vanne dotée d'une cartouche échangeable

(30) Priorität: 27.08.2013 EP 13004212
(43) Veröffentlichungstag der Anmeldung: 29.04.2015
(73) Patentinhaber: Georg Fischer Rohrleitungssysteme AG, 8201 Schaffhausen (CH)
(72) Erfinder: Jäckle, Timo, 78247 Hilzingen (DE)
(74) Vertreter: Fenner, Seraina

(56) Entgegenhaltungen:
- WO-A2-2011/002559
- DE-A1- 1 951 869
- US-A- 4 986 299
- US-A- 5 056 550
- US-A- 5 419 365
- US-A1- 2012 241 658
- US-B1- 6 722 388

## Beschreibung

Die Erfindung betrifft ein Ventil für flüssige und gasförmige Medien, insbesondere zur Regelung des Drucks in Rohrleitungen, enthaltend ein Gehäuse aus mindestens einem Ober-und Unterteil, eine Druckeinstelleinheit, wobei die Druckeinstelleinheit eine Spindel, einen Federteller, einen Federhalter und mindestens eine Feder aufweist, eine Kartusche, wobei die Kartusche eine Funktionseinheit bildet mittels der die Funktion des Ventils definiert wird, wobei die Kartusche vorzugsweise ein Innengehäuse, ein Befestigungsmittel, einen Kolben und eine Membrane enthält, wobei die Membrane zur Unterteilung des Gehäuses in einen mediumsfreien und einen mediumsdurchströmten Bereich dient.

Solche Ventile werden hauptsächlich in der häuslichen und industriellen Wasserversorgung eingesetzt, jedoch sind sie auch in anderen Einsatzgebieten und mit anderen Medien aufzufinden. Meist werden solche Ventile mit Funktionen bzw. Wirkungen eines Druckreduzier-oder Druckhalteventiles verwendet.

Druckreduzierventile dienen dazu, den höheren Druck im primärseitigen Verteilnetz auf einen optimalen Druck für den sekundärseitigen Abnahmestrang zu reduzieren, wodurch Armaturen und Verbraucher im Abnahmestrang vor zu hohen Drücken geschützt werden und dadurch die Lebenszeit der nachgeschalteten Armaturen erhöht werden kann. Zudem kann die Geräuschentwicklung durch den Einbau eines Druckreduzierventils im Abnahmestrang vermindert, wie auch der Mediumsverbrauch reduziert werden, insbesondere in Wasserversorgungsnetzen.

Das Druckhalteventil hingegen beeinflusst den Druck vor dem Ventil um ihn dort konstant zu halten. Druckhalteventile werden meist dafür verwendet, im Auslaufbereich von Pumpen, insbesondere Dosierpumpen, den notwendigen Gegendruck für den sicheren Betrieb der Pumpe zu gewährleisten. Dabei ist ein Gegendruckventil in der Regel kein Bestandteil der Pumpe sondern befindet sich an irgendeiner geeigneten Stelle in Förderrichtung des zu fördernden Mediums hinter der Pumpe. Das Druckhalteventil wird ebenfalls dazu verwendet Systeme vor zu hohen Drücken zu schützen. Sobald der voreingestellte Druck am Einlass des Ventils überschritten wird, öffnet sich das Ventil und der zu hohe Druck in den Leitungen vor dem Ventil kann wieder reduziert werden.

Die DE 44 34 634 C2 offenbart ein Druckreduzierventil bei welchem die Einstellung des gewünschten Abgangsdruckes einfach handhabbar ist. Das in das Gehäuse einströmende Medium weist einen hohen bzw. zu hohen Druck für die weitere Nutzung auf. Durch die Einstelleinheit kann der gewünschte Abgangsdruck eingestellt werden indem die Feder entsprechend vorgespannt wird. Das wiederum ergibt die entsprechende Kraft auf den Kolben, der den Abgangsdruck regelt. Ist die Feder stark zusammengepresst, erzeugt sie eine hohe Gegenkraft auf den Kolben, wodurch der gewünschte Abgangsdruck hoch ist. Der Kolben bzw. der Dichtsitz, der sich zwischen Ventilelement und ringförmigem Vorsprung des Gehäuses befindet, schliesst sich erst, wenn der aufbauende Druck im Ventil bzw. in der Kolbenkammer so gross ist, dass er den zulässigen Abgangsdruck überschreitet, wodurch der Kolben gegen die Federkraft gedrückt wird und das Ventilelement den Ventilsitz schliesst. Der Kolben und das Ventilelement mit Stange bestehen aus mehreren Einzelteilen, zudem sind Dichtelemente daran angeordnet, die die Dichtheit gewährleisten, die ebenfalls als separate Teile ausgebildet sind.

Die EP 0 759 132 B1 offenbart ein Druckhalteventil mit einem Gehäuse, einem im Gehäuse verschiebbar angeordneten Ventilkolben, wobei der Ventilkolben mittels einer Feder in Richtung Ventilsitz vorgespannt ist, wobei der Kolben bzw. dessen Ventilschaft in der Führungsscheibe angeordnet ist und zusammen einen Ringspalt bilden der als Drosselstelle wirkt.

Die US2012/0241658 A1 offenbart ein Ventil mit einer darin angeordneten Kartusche.

Diese Art der oben erwähnten Ventile bringen den Nachteil mit sich, dass bei einem Funktionswechsel des Ventils, das heisst wenn zuerst bspw. ein Druckreduzierventil benötigt wird das durch ein Druckhalteventil ausgewechselt werden soll, womöglich da sich der Einsatz der kompletten Anlage verändert hat, muss das komplette Ventil ausgetauscht werden. Bestenfalls besteht noch die Möglichkeit die Einzelteile im Inneren separat auszuwechseln, wobei das Gehäuse einer Nacharbeit unterzogen werden muss damit die Innereien eines andern Funktionstyps eines Ventils überhaupt eingesetzt werden können.
Das wiederum hat einerseits den Nachteil eines hohen Zeitaufwands und andererseits kann der Umbau kaum rückgängig gemacht und die Funktion des Ventils nicht mehr zurückgeändert werden. Zudem ist bei Ventilen aus dem Stand der Technik bekannten, dass sie durch ihre vielen Einzelteile einen zeitintensiven Wartungsaufwand bedingen.

Die US 5,056,550 offenbart ein Ventil welches eine Kartusche am Gehäuse angeordnet hat, die auswechselbar ist und dadurch eine Funktionsveränderung des Ventils erfolgen kann. Nachteilig ist, dass der Druckregelbereich nicht in derselben Einheit angeordnet ist und dadurch relativ lange Kraftübertragungswege entstehen.

Es ist Aufgabe der Erfindung ein Ventil vorzuschlagen, welches sich durch einen geringen Aufwand für unterschiedliche Funktionen eignet bzw. einsetzen lässt sowie auch die Herstellkosten minimiert werden sollen. Zudem soll die Wartung des Ventils einfach und schnell durchgeführt werden können.

Diese Aufgabe wird erfindungsgemäss dadurch gelöst, dass die Kartusche als Funktionseinheit vormontiert ist und im Gehäuse als komplette Einheit austauschbar angeordnet ist.

Das bringt den Vorteil mit sich, dass das Gehäuse für jeden Ventiltyp gleich ist und der Typ bzw. die Funktion des Ventils durch die Kartusche definiert wird. Das heisst, dass entsprechend der Baugrössen nur ein Ventilgehäuse hergestellte werden muss in das eine entsprechende Kartusche einbaubar ist, wodurch die Herstellkosten minimiert werden können. Die Kartusche bestimmt somit die Funktion des Ventils. So kann also in ein Ventilgehäuse eine Kartusche eingesetzt werden, die bspw. zur Druckreduzierung dient, wodurch ein Druckreduzierventil entsteht. Diese Kartusche kann aber bspw. auch durch eine Kartusche ersetzt werden, die bspw. zur Druckhaltung dient und somit kann mit demselben Gehäuse ohne jegliche Nacharbeit bspw. ein Druckhalteventil gebildet werden. Durch den Austausch der Kartusche kann somit die Funktion des Ventils geändert werden ohne dass eine Nacharbeit am Gehäuse notwendig ist da die Kartuschen jeweils dieselben Einbaumasse aufweisen und somit das Gehäuse dadurch kompatibel für alle Kartuschen derselben Baugrösse ist.

Die Kartusche ist eine vormontierte Baugruppe und besteht aus div. einzelnen Bauteilen entsprechend der Funktion für die die Kartusche bzw. das Ventil vorgesehen ist.

Eine bevorzugte Ausführungsform besteht darin, dass eine Kartusche ein Innengehäuse aufweist in dem ein Kolben angeordnet ist. Der Kolben kann einteilig ausgebildet sein oder auch mehrteilig, das bedeutet, dass am Kolben eine separate Kolbenspitze angeordnet sein kann, die ebenfalls mit dem Befestigungsmittel, welches vorzugsweise eine Schraube ist, vormontiert wird. Die Mehrteiligkeit des Kolbens vereinfacht die Herstellung und auch die Anordnung der Dichtfläche, die am Kolben bzw. an der Kolbenspitze angeordnet ist. Die Dichtfläche dient der Regelung des Ventils bzw. dem Durchlass. Die am Kolben bzw. an der Kolbenspitze angeordnete Dichtfläche ist meist aus einem anderen Material und kann bspw. als Flachdichtung ausgebildet sein, die zwischen Kolbenspitze und Kolben geklemmt ist, selbstverständlich sind auch andere Anordnungsmöglichkeiten der Dichtfläche umsetzbar. Die Dichtfläche wirkt mit dem Ventilsitz zusammen und regelt so den Durchfluss bzw. öffnet und schliesst das Ventil entsprechend. Zudem weist die Kartusche vorzugsweise eine Membrane auf, welche das Ventil bei den bevorzugten Ausführungsformen in einen mediumdurchströmten und einen mediumfreien Bereich unterteilt.

Der Austausch der Kartusche und somit eine Änderung der Funktion des Ventils kann ohne weitere Nacharbeit bzw. mechanische Nacharbeit am Gehäuse erfolgen somit kann jede Kartusche in ein und dasselbe Gehäuse der gleichen Baugrösse eingesetzt werden, was wie bereits erwähnt die Herstellkosten minimiert und die Funktion des Ventiles variabel macht.

Vorzugsweise wird diese modulare Bauart des Ventils bei Druckreduzier-und Druckhalteventilen eingesetzt, da diese einen ähnlichen Aufbau haben und es erlauben ihre Kartuschen bzw. die Einbaumasse der Kartuschen gleich zu gestalten um in ein einheitliches Gehäuse eingebaut werden zu können. Die einzubauende Kartusche ist somit vorzugsweise eine DruckreduzierKartusche oder eine DruckhalteKartusche, die jeweils im Gehäuse gegenseitig austauschbar angeordnet ist, wobei durch die Anordnung der entsprechenden Kartusche die Funktion des Ventils definiert wird. Diese Aufbauart des Ventils ermöglicht auch einen späteren Umbau bspw. eines Druckreduzierventils in bspw. ein Druckhalteventil, selbstverständlich sind auch noch weitere Ventiltypen denkbar, die mit entsprechenden Kartuschen gebildet werden können.

Damit ein solch modularer Aufbau möglich ist, definiert die Kartusche nicht nur die Funktion sondern beinhaltet auch die Abdichtung des Ventils. Somit sind die meisten Dichtungen in oder an der Kartusche angeordnet. Vorzugsweise befindet sich mindestens eine Dichtung an einem Aussendurchmessers des Innengehäuses der Kartusche, wobei auch mehrere möglich sind. In einer bevorzugten Ausgestaltung der Kartusche befindet sich eine Dichtung am kleineren Durchmesser des Innengehäuses, die zwischen Kartusche und Eintritte des Auslassstutzen dichtet und eine weiter Dichtung befindet sich am grösseren Durchmesser der Kartusche, die der Abdichtung zwischen Innengehäuse der Kartusche und dem Aufnahmebereich für das Innengehäuse der Kartusche im Gehäuseunterteil dient.

In einer bevorzugten Ausgestaltung befindet sich ein Dichtelement am Kolben oder in der Kolbenbohrung damit kein Medium durch die Kolbenbohrung fliessen kann und dadurch die Dichtheit gewährt ist. Vorzugsweise ist auch am Innengehäuse ein Dichtelement angeordnet, welches zur Gewährleistung der Dichtheit zwischen Kartusche und Gehäuse dient.

Als weiteres Dichtelement ist am Kolben bzw. an der Kolbenspitze eine Dichtfläche angeordnet die der Funktion des Druckreduzier-oder Druckhalteventils dient und mit dem Ventilsitz korrespondiert, wodurch das Ventil geöffnet oder geschlossen wird.

Der Ventilsitz ist vorzugsweise in der Kartusche bzw. am Innengehäuse angeordnet. Durch diesen Aufbau definiert die Kartusche die Funktion und das Gehäuse dient in erster Linie der Aufnahme der Kartusche sowie dem Ein-und Ausströmen des Mediums und dem Festlegen des voreinzustellenden Drucks über die Druckeinstelleinheit, jedoch nicht der Funktion des Ventils, diese wird über die Kartusche definiert. Der Ventilsitz und die Dichtfläche, welche am Kolben bzw. an der Kolbenspitze angeordnet ist regeln den Durchfluss indem sie entsprechend geöffnet oder geschlossen sind.

Vorzugsweise weist die Kartusche eine Scheibe auf. Diese dient der besseren Stabilisierung der Membrane. Wenn nun das Medium über die Bypassbohrungen an die Membrane strömt um diese hochzudrücken und dadurch den Kolben in der Kolbenbohrung zu verschieben, gibt die Scheibe der Membrane eine gewisse Stabilität wodurch der Kolben besser hochgezogen werden kann.

Ein weiterer Vorteil des erfindungsgemässen Ventils besteht darin, dass auch die Druckeinstelleinheit auch bei einem Funktionswechsel des Ventils bestehen bleiben kann wenn denn eine solche benötigt wird.

Ausführungsbeispiele der Erfindung werden anhand der Figuren beschrieben, wobei sich die Erfindung nicht nur auf das Ausführungsbeispiel beschränkt. Es zeigen:
- Fig. 1: einen Längsschnitt durch ein erfindungsgemässes Druckreduzierventil in geöffneter Stellung,
- Fig. 2: einen Längsschnitt durch ein erfindungsgemässes Druckreduzierventil in geschlossener Stellung
- Fig. 3: einen Längsschnitt durch ein erfindungsgemässes Druckhalteventil in geöffneter Stellung,
- Fig. 4: einen Längsschnitt durch eine Kartusche mit Funktion eines Druckreduzierventils und
- Fig. 5: einen Längsschnitt durch eine Kartusche mit Funktion eines Druckhalteventils.

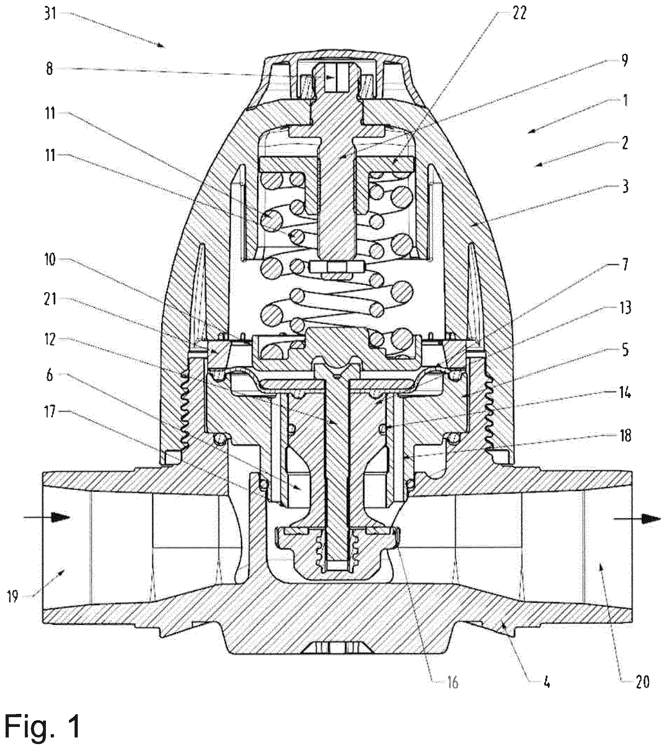

Fig. 1 stellt ein erfindungsgemässes Ventil 1 dar bei welchem eine Kartusche 30 eingesetzt ist, die zur Druckreduzierung dient, wodurch ein Druckreduzierventil 31 gebildet wird. Das Gehäuse 2 ist vorzugsweise aus einem Oberteil 3 und Unterteil 4 gebildet und bleibt bei einem Funktionswechsel des Ventils 1 bestehen und muss auch nicht nachgearbeitet werden um eine andere Kartusche 30, 40 aufnehmen zu können. Im Gehäuse 2 ist eine Kartusche 30 angeordnet die ein Innengehäuse 5 aufweist. Durch das Zusammenschrauben des Gehäuseoberteils 3 und Gehäuseunterteils 4, wird zwischen dem Innengehäuse 5 und dem Haltering 21 eine Membrane 7 zusätzlich festgeklemmt, die ebenfalls an der vormontierten Kartusche 30 angeordnet ist, die das Ventil 1 in einen mediumsfreien und einen mediumsdurchströmten bzw. mediumsaufweisenden Bereich trennt. Vorstellbar sind auch Bauweisen eines Druckreduzierventils 31 bei denen die beiden Gehäuseteile mittels separater Befestigungsmittel miteinander verbunden werden oder solche bei denen keine weitere Distanzierung notwendig ist.
Das Innengehäuse 5 weist Durchströmungsöffnungen 15 auf, durch die das durch den Einströmungsstutzen 19 hineingeströmte Medium anschliessend hindurchströmt und bei geöffneter Ventilstellung weiter durch den unteren Bereich der Kolbenbohrung 6 am Ventilsitz 17 vorbei Richtung Auslassstutzen 20 strömt.
Der Kolben 6, welcher auch in der vormontierten Kartusche 30 angeordnet ist, wird durch die Federn 11, der Druckeinstelleinheit 8 entsprechend nach unten gedrückt bzw. geöffnet. Die entsprechende Federkraft, die durch die vorgespannten Federn 11 mit Hilfe des Federhalters 22 auf den Federteller 10 bzw. auf das Befestigungsmittel 12 wirkt, hält das Druckreduzierventil 31 geöffnet. Die Stärke der Vorspannung der Federn 11 wird über die Spindel 9 erreicht, mittels der die Federn 11 auf eine gewünschte Länge zusammengespannt werden können, was die entsprechende Vorspannkraft bzw. Federkraft ergibt. Es besteht auch die Möglichkeit nur eine Feder 11 in das Ventil 31 vorzusehen, das vermindert die Federkraft wodurch der einstellbare Abgangsdruck im einem niedrigeren Bereich liegt als wenn zwei Federn 11 eingebaut sind und dadurch eine höhere Federkraft aufweisen und somit einen höheren Abgangsdruck zulassen. Durch diese Anordnungsmöglichkeit der Federn 11 ist eine breite Spannweite des einstellbaren Abgangsdrucks möglich ohne die Baugrösse des Ventils zu verändern.

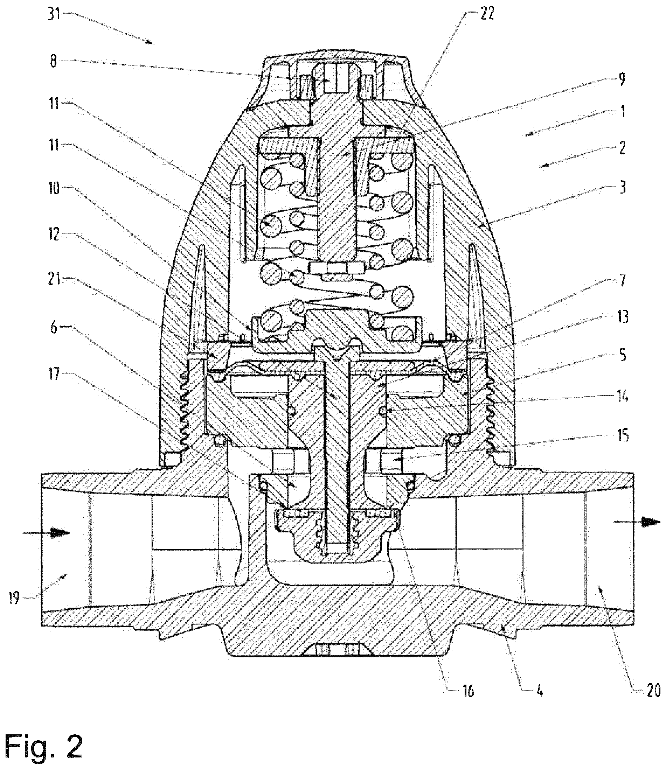

Fig. 2 zeigt das Druckreduzierventil 31 in geschlossener Stellung, Der Abgangsdruck liegt somit über dem voreingestellten Abgangsdruck. Das Medium strömt über die Bypassbohrungen 18, welche im Innengehäuse 5 angeordnet sind hindurch in den Raum unterhalb der Membrane 7. Der Druck der dort entsteht drückt gegen die Federkraft. Sobald die Kraft durch das Medium unterhalb der Membrane 7 höher ist als der zulässige Abgangsdruck bzw. die eingestellte Federkraft, werden die Federn 11 weiter zusammengepresst und der Kolben 13 wird in der Kolbenbohrung 6 durch die Membrane 7 nach oben gezogen. Das am Kolben 13 angeordnete Dichtelement 14 dichtet die Kolbenbohrung 6 ab. Durch das durch die Durchströmungsöffnungen 15 einströmende Medium wird das Dichtelement 14 druckunterstützt. Durch den hochgezogenen Kolben 13 ist der Ventilsitz 17 geschlossen da die Dichtfläche 16 des Kolbens 13 bzw. der Kolbenspitze 23 den Ventilsitz 17 abdichtet. Senkt sich der Abgangsdruck unter den voreingestellten Wert, senkt sich auch der Druck unterhalb der Membrane 7. Der Kolben 13 sinkt entsprechend ab und das Medium kann das Ventil 31 wieder durchströmen.
Das erfindungsgemässe Ventil 1, 31, 41 zeichnet sich dadurch aus, dass die Kartusche 30, 40 vormontiert ist und die Kartuschen 30, 40 derart ausgebildet sind, dass Kartuschen 30, 40 mit unterschiedlichen Funktionen in dasselbe Gehäuse 2 passen, wodurch die Gehäuse 2 kompatibel für alle entsprechenden Kartuschen 30, 40 ihrer entsprechenden Baugrösse sind.

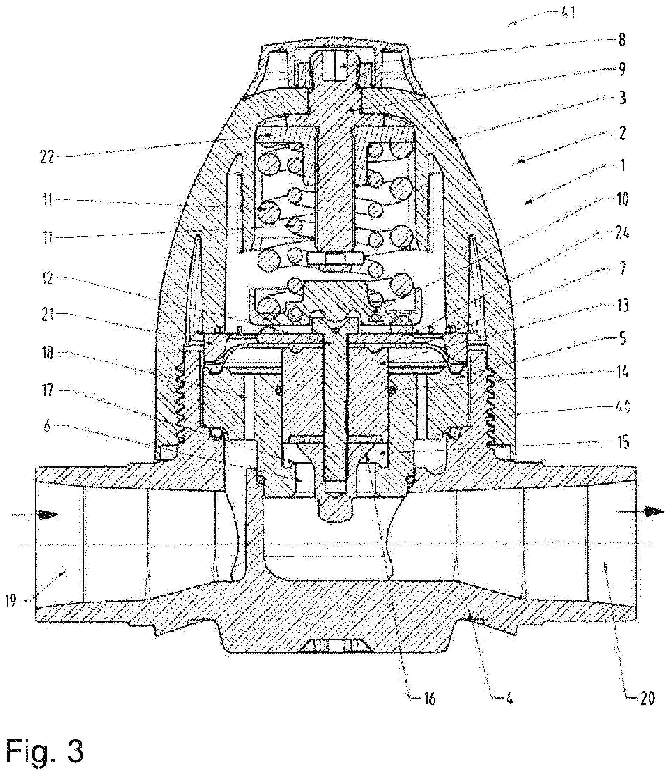

Fig. 3 zeigt ein erfindungsgemässes Ventil 1 das durch die eingebaute Kartusche 40 als Druckhalteventil 41 dient. Selbstverständlich sind auch noch weitere Ventiltypen denkbar die eine weitere Funktion aufweisen, Bedingung dazu ist nur, dass die Kartusche in das Gehäuse 2 einbaubar ist und die Funktion des Ventils 1 von der Kartusche bestimmt wird. Auch beim Druckhalteventil 41 verhält sich die Einstellung des zulässigen Drucks ebenfalls über die Druckeinstelleinheit 8 analog zum Druckreduzierventil 31, da auch hier dieselbe Druckeinstelleinheit 8 eingesetzt werden kann.
Das Druckhalteventil 41 in Fig. 3 regelt den Druck in der Zuleitung. Das heisst, steigt der Druck in der Zuleitung an bzw. steigt der Druck beim durch den Einlassstutzen 19 einströmenden Medium derart, dass er den zulässigen voreingestellten Druck überschreitet strömt das Medium mit zu hohem Druck durch die Bypassbohrung 18 und stösst auf die Membrane 7, welche den Kolben 13 hochzieht und somit den Ventilsitz 17 öffnet und das Medium durch die Durchströmungsöffnung 15 abfliessen kann und sich der Druck in der Zuleitung wieder senkt. Bei zu tiefem Druck in der Zuleitung verhält sich das Druckhalteventil 41 umgekehrt, indem sich der Kolben 13 senkt und dadurch der Ventilsitz 17 geschlossen wird strömt kein Medium ab und in der Zuleitung steigt der Druck wieder an.
Wie bereits zuvor erwähnt, zeichnet sich die vorliegende Erfindung dadurch aus, dass ein Ventil 1 gebildet werden kann, das ein universell einsetzbares Gehäuse 2 aufweist, in das eine Kartusche 30, 40 einsetzbar ist, die als Funktionseinheit ausgebildet ist bzw. die Funktion des Ventils 1 definiert und individuell austauschbar ist sowie auch die Druckeinstelleinheit vorzugsweise universell nutzbar ist und bei einem Funktionswechsel des Ventils 1 auch wieder genutzt werden kann. Die Kartusche 30, 40 ist vormontiert, das heisst, dass die Kartusche 30, 40 aus einzelnen Bauteilen besteht, wie beispielsweise für die hier aufgeführten Beispiele des Druckreduzier-und Druckhalteventils 31, 41 einem Kolben 13, einem Befestigungsmittel 12, einer Membrane 7, einer Scheibe 24, und einem Innengehäuse 5 sowie einer Kolbenspitze 23 an der die Dichtfläche 16 angeordnet ist, selbstverständlich ist auch ein einteiliger Kolben denkbar der kein separates Bauteil einer Kolbenspitze aufweist und an dem direkt die Dichtfläche angeordnet ist. Jedoch sind auch andere Bauteile für den Aufbau einer Kartusche denkbar, die sich in das Gehäuse 2 einbauen lassen und die Funktion des Ventils 1 definieren.

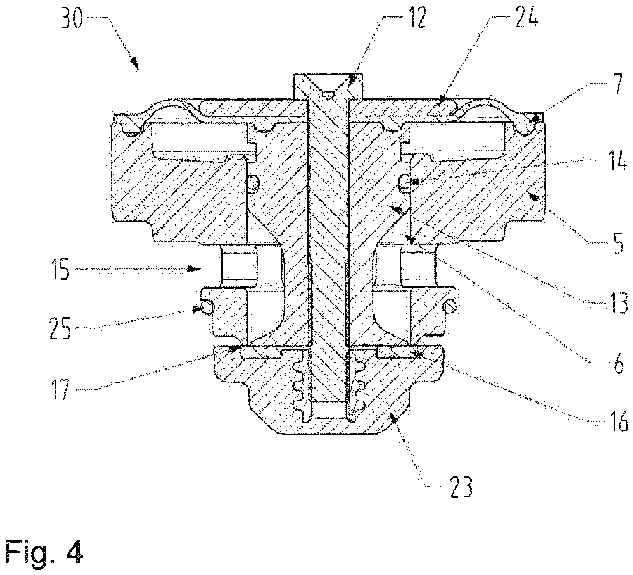

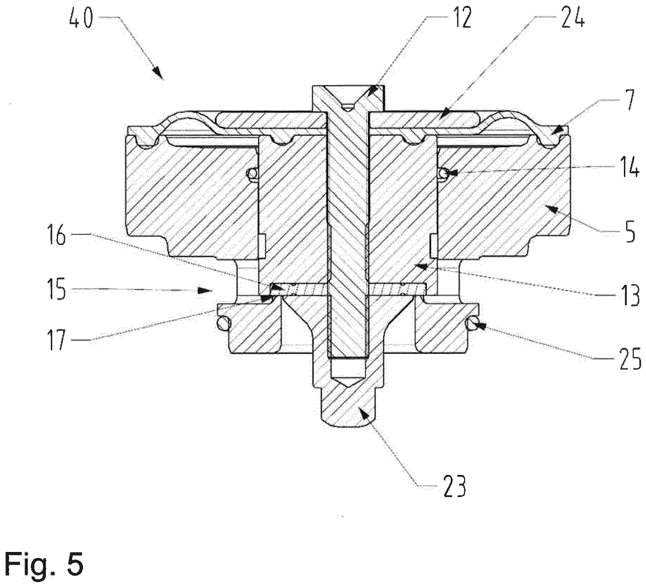

Fig. 4 zeigt die Kartusche 30, welche in ein Ventilgehäuse 2 einbaubar ist um ein Druckreduzierventil 31 zu erhalten. Neben der Bestimmung der Funktion des Ventils 1 übernimmt die Kartusche 30, 40 auch die Abdichtung. Das heisst, die Dichtelemente welche zur Abdichtung des Ventils 1 dienen sind in oder an der Kartusche 30, 40 angeordnet. Das Druckreduzier-wie auch das Druckhalteventil 31, 41 weisen ein Dichtelement 14 am Kolben 13 auf bzw. in der Kolbenbohrung 6. Der Ventilsitz 17 ist ebenfalls in der Kartusche 30, 40 angeordnet, das heisst, nicht direkt am Gehäuseunterteil 4 wie meist aus dem Stand der Technik bekannt. Der Ventilsitz 17 ist am Innengehäuse 5 angeordnet und übernimmt mit der Dichtfläche 16, welche in diesen Ausführungsbeispielen an der Kolbenspitze 23 angeordnet ist, wobei bei einem einteiligen Kolben auch eine Anordnung direkt am Kolben denkbar wäre, die Öffnungs-und Schliessfunktion des Ventils 1, wodurch die Kartusche 30, 40 die Funktionseinheit bildet, was aus Fig. 4 und 5 ersichtlich ist. Die Kartusche 30 in Fig. 4 zeigt eine Kartusche 30 eines Druckreduzierventils 31 und die in Fig. 5 dargestellte Kartusche 40 zeigt eine Kartusche 40 eines Druckhalteventils 41.

### Bezugszeichenliste

- 1: Ventil
- 2: Gehäuse
- 3: Gehäuseoberteil
- 4: Gehäuseunterteil
- 5: Innengehäuse
- 6: Kolbenbohrung
- 7: Membrane
- 8: Druckeinstelleinheit
- 9: Spindel
- 10: Federteller
- 11: Feder
- 12: Befestigungsmittel
- 13: Kolben
- 14: Dichtelement
- 15: Durchströmungsöffnung
- 16: Dichtfläche
- 17: Ventilsitz / Dichtkante
- 18: Bypassbohrung
- 19: Einlassstutzen
- 20: Auslassstutzen
- 21: Haltering
- 22: Federhalter
- 23: Kolbenspitze
- 24: Scheibe
- 25: Dichtelement
- 30: Kartusche zur Druckreduzierung
- 31: Druckreduzierventil
- 40: Kartusche zur Druckhaltung
- 41: Druckhalteventil

## Patentansprüche

1. Ventil (1) für flüssige und gasförmige Medien insbesondere zur Regelung des Drucks in Rohrleitungen enthaltend ein Gehäuse (2) aus mindestens einem Ober-und Unterteil (3, 4), eine Druckeinstelleinheit (8), wobei die Druckeinstelleinheit (8) eine Spindel (9), einen Federteller (10), einen Federhalter (22) und mindestens eine Feder (11) aufweist, eine Kartusche (30, 40), wobei die Kartusche (30, 40) eine Funktionseinheit bildet mittels der die Funktion des Ventils (1) definiert wird, wobei die Kartusche (30, 40) ein Innengehäuse (5), ein Befestigungsmittel (12) und einen Kolben (13) enthält, **dadurch gekennzeichnet, dass** die Kartusche (30,40) eine Membrane (7) enthält, wobei die Membrane (7) zur Unterteilung des Gehäuses (2) in einen mediumsfreien und einen mediumsdurchströmten Bereich dient, und wobei die Kartusche (30, 40) als Funktionseinheit vormontiert ist und im Gehäuse (2) als komplette Einheit austauschbar angeordnet ist.

2. Ventil (1) nach Anspruch 1, **dadurch gekennzeichnet, dass** die Kartusche (30, 40) eine DruckreduzierKartusche (30) oder eine DruckhalteKartusche (40) ist, die jeweils im Gehäuse (2) gegenseitig austauschbar angeordnet ist, wobei die entsprechende Kartusche (30,0) die Funktion des Ventils (1, 31, 41) definiert.

3. Ventil (1) nach einem der Ansprüche 1 oder 2, **dadurch gekennzeichnet, dass** die Kartusche (30, 40) mindestens ein Dichtelement (14, 16, 25) aufweist.

4. Ventil (1) nach einem der Ansprüche 1 bis 3, **dadurch gekennzeichnet, dass** die Kartusche (30, 40) ein Innengehäuse (5) aufweist, wobei am Innengehäuse (5) ein Ventilsitz (17) angeordnet ist.

5. Ventil (1) nach einem der Ansprüche 1 bis 4, **dadurch gekennzeichnet, dass** am Kolben (13) bzw. an der Kolbenspitze (23) eine Dichtfläche (16) angeordnet ist, die mit dem Ventilsitz (17) den Durchlasse des Ventils (1, 31, 41) regelt.

6. Ventil nach einem der Ansprüche 1 bis 5, **dadurch gekennzeichnet, dass** die Kartusche (30, 40) eine Scheibe (24) aufweist.

## Claims

1. Valve (1) for fluid and gaseous media, more particularly for regulating the pressure in pipelines, containing a housing (2) of at least one upper and lower part (3,4), a pressure adjustment unit (8), wherein the pressure adjustment unit (8) comprises a spindle (9), a spring plate (10), a spring holder (22) and at least one spring (11), a cartridge (30,40), wherein the cartridge (30,40) forms a function unit by means of which the function of the valve is defined (1), wherein the cartridge (30, 40) contains an interior housing (5), a fastening means (12) and a poppet (13), **characterised in that** the cartridge (30, 40) contains a diaphragm (7), wherein the diaphragm (7) serves for dividing the housing (2) into a medium-free and a medium-flowing area, and wherein the cartridge (30, 40) is pre-fitted as a function unit and is disposed replaceably as a complete unit in the housing (2).

2. Valve (1) according to Claim 1 **characterised in that** the cartridge (30, 40) is a pressure-reducing cartridge (30) or a pressure-maintaining cartridge (40) which is respectively mounted mutually interchangeably in the housing (2), wherein the function of the valve (1, 31, 41) is defined by the corresponding cartridge (30, 40).

3. Valve (1) according to one of Claims 1 or 2 **characterised in that** the cartridge (30, 40) has at least one sealing element (14, 16, 25).

4. Valve (1) according to one of Claims 1 to 3 **characterised in that** the cartridge (30, 40) has an interior housing (5) wherein a valve seat (17) is disposed on the interior housing (5).

5. Valve (1) according to one of Claims 1 to 4 **characterised in that** a sealing surface (16) is disposed on the poppet (13) or at the poppet tip (23) and with the valve seat (17) regulates the passages through the valve (1, 31, 41).

6. Valve according to one of Claims 1 to 5 **characterised in that** the cartridge (30, 40) has a disc (24).

## Revendications

1. Soupape (1) pour milieux liquides et gazeux, en particulier pour la régulation de la pression dans des conduites tubulaires, contenant un boîtier (2) constitué d'au moins une partie supérieure et une partie inférieure (3, 4), une unité d'ajustement de la pression (8), l'unité d'ajustement de la pression (8) présentant une broche (9), une coupelle de ressort (10), un dispositif de retenue de ressort (22) et au moins un ressort (11), une cartouche (30, 40), la cartouche (30, 40) formant une unité fonctionnelle au moyen de laquelle la fonction de la soupape (1) est définie, la cartouche (30, 40) contenant un boîtier interne (5), un moyen de fixation (12) et un piston (13),
**caractérisée en ce que**
la cartouche (30, 40) contient une membrane (7), la membrane (7) servant à diviser le boîtier (2) en une région sans milieu et une région parcourue par le milieu,
et la cartouche (30, 40) étant prémontée sous forme d'unité fonctionnelle et étant disposée dans le boîtier (2) de manière remplaçable sous forme d'unité complète.

2. Soupape (1) selon la revendication 1, **caractérisée en ce que** la cartouche (30, 40) est une cartouche de réduction de pression (30) ou une cartouche de maintien de pression (40) qui est disposée à chaque fois dans le boîtier (2) de manière mutuellement remplaçable, la cartouche correspondante (30, 0) définissant la fonction de la soupape (1, 31, 41).

3. Soupape (1) selon l'une quelconque des revendications 1 et 2, **caractérisée en ce que** la cartouche (30, 40) présente au moins un élément d'étanchéité (14, 16, 25).

4. Soupape (1) selon l'une quelconque des revendications 1 à 3, **caractérisée en ce que** la cartouche (30, 40) présente un boîtier interne (5), un siège de soupape (17) étant disposé au niveau du boîtier interne (5).

5. Soupape (1) selon l'une quelconque des revendications 1 à 4, **caractérisée en ce qu'**une surface d'étanchéité (16) est disposée au niveau du piston (13) ou au niveau de la pointe de piston (23), laquelle régule avec le siège de soupape (17) le passage à travers la soupape (1, 31, 41).

6. Soupape selon l'une quelconque des revendications 1 à 5, **caractérisée en ce que** la cartouche (30, 40) présente un disque (24).
